# EUROPÄISCHE PATENTANMELDUNG

(11) **EP 2 060 881 A1**
(43) Veröffentlichungstag der Anmeldung: **20.05.2009**
(21) Anmeldenummer: 07120105.7
(22) Anmeldetag: 06.11.2007
(51) Int. Cl.: G01F 11/00, B65B 1/30, B65D 47/36, B65D 51/20

(54) **Dosiereinheit mit ersetzbarer Behältereinheit**

(71) Anmelder: Mettler-Toledo AG, 8606 Greifensee (CH)
(72) Erfinder: Lüchinger, Paul, 8610, Uster (CH)

(57) **Zusammenfassung**

Eine Dosiereinheit umfasst ein Gehäuse, mindestens einen im Gehäuse ausgebildeten Aufnahmeraum für Dosiergut, ein mit dem Gehäuse fest verbundener Dosierkopf, sowie einen am Gehäuse ausgebildeten Anschlussstutzen, wobei der Aufnahmeraum den Anschlussstutzen durchgängig mit dem Dosierkopf verbindet. Mit dem Anschlussstutzen ist eine auf den Anschlussstutzen passende und mindestens einen irreversibel aufbrechbaren Verschluss aufweisende Anschlussmuffe einer Behältereinheit verbindbar, und mit dem Anschlussstutzen ist ein dem Aufbrechen des irreversibel aufbrechbaren Verschlusses dienendes Aufbrechelement verbunden.

## Beschreibung

Die Erfindung betrifft eine Dosiereinheit mit einem Gehäuse und mit mindestens einem im Gehäuse ausgebildeten Aufnahmeraum für Dosiergut, wobei durch den Aufnahmeraum ein mit dem Gehäuse fest verbundener Dosierkopf mit einem am Gehäuse ausgebildeten Anschlussstutzen verbunden wird.

Derartige Dosiereinheiten werden zum Beispiel in Laborgeräten verwendet, in welchen pulverförmiges, pastenförmiges oder flüssiges Dosiergut in abgemessenen Mengen einer Verarbeitung zugeführt und im Betrieb des Gerätes verbraucht werden. Aufgrund des Verbrauchs muss der Dosiergutvorrat somit periodisch ergänzt werden. Ein Laborgerät der genannten Art wird in der US 5 145 009 A offenbart. Die Dosiereinheit weist einen Aufnahmeraum auf, welcher mit Dosiergut verfüllt werden kann. Am unteren Ende der Dosiereinheit ist ein Dosierkopf angeordnet, dessen Austrittsöffnungsquerschnitt mit einem Verschlusselement von der Stellung Verschlossen bis zur Stellung Offen stufenlos eingestellt werden kann. Die Dosiereinheit kann in eine Antriebsvorrichtung des Laborgeräts eingesetzt werden.

Wenn der Dosiergutvorrat im Aufnahmeraum aufgebraucht ist, so kann derselbe nachgefüllt werden, wobei Dosiergut aus einem Vorratsbehälter in den Aufnahmeraum umgefüllt wird. Dieses Umfüllen von einem Vorratsbehälter in einen Aufnahmeraum ist einerseits bei den erwähnten Labor- beziehungsweise Dosiergeräten ein relativ häufig auftretender Vorgang und andrerseits bei der Verwendung von herkömmlichen Utensilien wie Einfülltrichter und Spatel eine relativ zeitraubende und zudem möglicherweise auch gefährliche Tätigkeit, beispielsweise wenn das umzufüllende Pulver giftig ist, oder wenn sonst aus irgend einem Grund jedes Verschütten auch von kleinsten Mengen vermieden werden muss.

Die vorliegende Erfindung hat deshalb zur Aufgabe, eine Dosiereinheit der eingangs vorgestellten Art zu schaffen, bei welcher die im Betrieb zu verbrauchendes Dosiergut rasch und sicher verfüllt werden kann.

Diese Aufgabe wird von einer Dosiereinheit gemäss dem Anspruch 1 und mit einer Behältereinheit gemäss dem Anspruch 6 erfüllt, welche gemäss dem Anspruch 15 in einem Laborgerät zur Verarbeitung pulverförmigem, pastenförmigem oder flüssigem Dosiergut verwendet werden kann. Detailaspekte und weiterentwickelte Ausführungsformen der Erfindung sind in den untergeordneten Ansprüchen definiert.

Eine erfindungsgemässe Dosiereinheit umfasst ein Gehäuse, mindestens einen im Gehäuse ausgebildeten Aufnahmeraum für Dosiergut, einen mit dem Gehäuse fest verbundenen Dosierkopf, sowie einen am Gehäuse ausgebildeten Anschlussstutzen, wobei der Aufnahmeraum den Anschlussstutzen durchgängig mit dem Dosierkopf verbindet. Eine Behältereinheit kann mittels mindestens einer an der Behältereinheit angeordneten Anschlussmuffe mit dem Anschlussstutzen verbunden werden. Innerhalb dieser Anschlussmuffe ist mindestens ein irreversibel aufbrechbarer Verschluss angeordnet. Um diesen Verschluss während des Verbindungsvorganges der Behältereinheit mit der Dosiereinheit aufzubrechen, weist der Anschlussstutzen ein dem Aufbrechen des irreversibel aufbrechbaren Verschlusses dienendes Aufbrechelement auf.

Dabei ist das Aufbrechelement vorzugsweise an der Mündung des Anschlussstutzens angeordnet und der Anschlussstutzen weist an seiner Aussenseite eine zum Einführen des Anschlussstutzens in die Anschlussmuffe ausgebildete Führungspartie auf. Beim Verbinden der Behältereinheit mit der Dosiereinheit wird die Anschlussmuffe somit zuerst durch die Führungspartie geführt und erst bei weiterem Ineinanderschieben des Anschlussstutzens in die Anschlussmuffe wird der Verschluss aufgebrochen.

Dadurch, dass der Verschluss kein Ventil ist, sondern dass der Verschluss irreversibel aufgebrochen wird, kann eine weitgehend gerade Verbindung zwischen der Behältereinheit und dem Aufnahmeraum erreicht werden. Diese gerade Verbindung weist zudem kaum eine Engstelle auf. Dadurch können selbst pappige Pulver problemlos von der Behältereinheit in den Aufnahmeraum gelangen.

Der Führungspartie in Verbindung mit der daran eng anschliessenden Muffe kommen dabei zwei Aufgaben zu. Erstens wird der irreversibel aufbrechbare Verschluss durch das Aufbrechelement mittels einer genau geführten Bewegung aufgebrochen. Dadurch kann sichergestellt werden, dass der Verschluss immer in der gewünschten Art und Weise aufgebrochen wird. Gewünscht ist nämlich eine definierte Zerstörung entlang definierter Schnitt- oder Bruchlinien, so dass die Reste des zerschnittenen oder zerbrochenen Verschlusses stets mit dem Behältergehäuse verbunden bleiben und die Reste nicht das Dosiergut kontaminieren oder gar den Dosierkopf verstopfen. Zweitens dichtet die Führungspartie die Übergangsstelle ausreichend ab, so dass kein Dosiergut über die Verbindungsstelle in die Umgebung gelangen kann.

Die Behältereinheit mit dem irreversibel aufbrechbaren Verschluss hat somit den Charakter einer Kartusche in dem Sinne, dass nach dem Aufbrauchen des Dosierguts die leere Behältereinheit durch eine neue, volle Behältereinheit ersetzt werden kann, wobei der Verschluss erst durch Verbinden der Behältereinheit mit der Dosiereinheit aufgebrochen wird. Vorzugsweise findet das Verbinden über Kopf statt, das heisst, dass die Behältereinheit mit dem aufbrechbaren Verschluss gegen oben in eine Aufnahmevorrichtung gestellt wird und der Anschlussstutzen von oben in die Anschlussmuffe hineingedrückt wird. Anschliessend kann diese Dosiereinheit in die Gebrauchslage gedreht und in das Laborgerät eingesetzt werden.

Von noch grösserer Bedeutung sind die Möglichkeiten, welche das erfindungsgemässe System in der Handhabung toxischen Dosierguts bietet. So kann die Behältereinheit mit dem gefährlichen Dosiergut unter höchsten Sicherheitsvorkehrungen verfüllt und absolut dicht verschweisst werden. Dadurch steht das Dosiergut ununterbrochen unter dichtem Verschluss. Erst mit dem Verbinden der Behältereinheit mit der Dosiereinheit gelangt das Dosiergut sicher in deren Dosierkopf, so dass keine Dosiergutpartikel in die Umgebung gelangen können. Ferner ist die Dosiereinheit unmittelbar nach dem Verbinden betriebsbereit, wobei das Dosiergut nur der im Aufnahmeraum befindlichen Atmosphäre ausgesetzt wird und gegebenenfalls dadurch Oxydation oder Feuchteadsorption und Feuchteabsorption in grösserem Umfang verhindert werden können. Der kritische und langwierige Vorgang des Umfüllens des Dosiergut aus einem Lagerbehälter in einen Aufnahmeraum wird somit gänzlich vermieden, und die gestellte Forderung, dass das Dosiergut sicher in die Dosiereinheit eingefüllt werden kann, wird in idealer Weise erfüllt.

Die Führungspartie kann einen orthogonal zu ihrer Mittellängsachse konstanten kreisrunden Querschnitt aufweisen, so dass der Anschlussstutzen in beliebig gedrehter Stellung in die Anschlussmuffe eingesetzt und nach dem Einsetzen ebenfalls noch gedreht werden kann. Bevorzugt ist jedoch eine Querschnittsform der Führungspartie, welche an mindestens einer Stelle des Umfanges von der kreisrunden Form abweicht. Beispielsweise könnte eine zum Teil kreisrunde Umfangskontur der Führungspartie segmentweise abgeflacht sein, oder die Führungspartie könnte auch orthogonal zu ihrer Mittellängsachse einen mehreckigen Querschnitt aufweisen.

Durch die abgeflachte, mehreckige oder allgemein von einer kreiszylindrischen Form abweichende Gestaltung der Führungspartie und der komplementär dazu passenden Anschlussmuffe wird ein Verdrehen des Anschlussstutzens während und nach dem Einsetzen in die Anschlussmuffe zwangsläufig verhindert. Dieser verdrehungsfreie Sitz des Anschlussstutzens in der Anschlussmuffe weist insbesondere den Vorteil auf, dass die weiter oben erwähnten, definierten Schnitte erzeugbar sind.

Die Verbindung zwischen dem Anschlussstutzen und der Anschlussmuffe kann zusätzlich durch einen Schnappverschluss gesichert sein, welcher nach dem vollständigen Einführen des Anschlussstutzens in die Anschlussmuffe einrastet und ein unbeabsichtigtes Lösen der Verbindung verhindert. Selbstverständlich kann dieser Schnappverschluss so konstruiert sein, dass die Behältereinheit nicht mehr von der Dosiereinheit getrennt werden kann. Dies hat den Vorteil, dass das Risiko einer Kontamination der Umgebung auf ein Minimum reduziert werden kann. Die Dosiereinheit wird nach dem Verbrauch des Dosiergut nicht erneut mit einer Behältereinheit verbunden, sondern zusammen mit der Behältereinheit entsorgt.

Eine weitere Möglichkeit, die Verbindung zwischen dem Anschlussstutzen und der Anschlussmuffe zu sichern besteht in einem Schraubverschluss. Beispielsweise kann ein kreiszylindrischer Basisteil des Anschlussstutzens mit einem Aussengewinde versehen sein, während eine der Anschlussmuffe zugeordnete und gegenüber dieser drehbare Überwurfmutter mit einem entsprechenden Innengewinde versehen ist. Die das Ende des Anschlussstutzens bildende Führungspartie kann dabei wie oben beschrieben eine nicht kreiszylindrische Form aufweisen, so dass auch bei der Sicherung mit einer Überwurfmutter ein Verdrehen des Anschlussstutzens während und nach dem Einsetzen in die Anschlussmuffe zwangsläufig verhindert wird. Mithilfe der Kraftübersetzung durch das Gewinde können auch wesentlich widerstandsfähigere, irreversibel aufbrechbare Verschlüsse aufgebrochen werden.

Selbstverständlich lässt sich das zuletzt beschriebene Sicherungskonzept mit einer Überwurfmutter auch umkehren, indem das Aussengewinde an der Anschlussmuffe angebracht wird und eine dem Anschlussstutzen zugeordnete und gegenüber diesem drehbare Überwurfmutter ein entsprechendes Innengewinde trägt. Ferner können an der Überwurfmutter auch Rastelemente angeordnet sein, welche wie beim Schnappverschluss ein Trennen der Behältereinheit von der Dosiereinheit verhindern.

Wie aus der vorangehenden Beschreibung hervorgeht, wird die Behältereinheit einmal verwendet und dann entsorgt. Je nach Verwendungszweck, insbesondere bei der Handhabung von sehr giftigem Dosiergut, kann auch die Dosiereinheit als Verbrauchsmaterial konzipiert sein. Das heisst, dass diese nur einmal befüllt wird, wobei nach der gewünschten Anzahl Dosierungen die Dosiereinheit mitsamt der Behältereinheit entsorgt wird, ohne die Behältereinheit von der Dosiereinheit zu trennen. Für diesen Verwendungszweck sind die Rastelemente vorzugsweise derart ausgelegt, dass sich die Behältereinheit nach dem Verbinden nicht mehr von der Dosiereinheit trennen lässt. Als Rastelemente können formschlüssige Mittel wie beispielsweise in Bohrungen eingreifende, federnde Sperrnocken, kraftschlüssige Mittel wie beispielsweise Presspassungen, oder stoffschlüssige Verbindungen wie beispielsweise durch den Verbindungsvorgang aktivierte Klebstoffe verwendet werden.

Das Aufbrechelement ist bevorzugt derart ausgestaltet, dass es mindestens drei vom Rand der Anschlussstutzenmündung gegen einen vorgelagerten Punkt der Mittellängsachse strebende und somit die Kanten einer Pyramide bildende Schneiden aufweist. Mittels dieser Schneiden kann der irreversibel aufbrechbare Verschluss gezielt zerschnitten werden, so dass keine Bruchstücke entstehen, welche von der Behältereinheit losgelöst in den Aufnahmeraum gelangen könnten.

Eine erfindungsgemässe Behältereinheit, welche zu einer Dosiereinheit im Sinne der vorangegangenen Beschreibung passt, umfasst ein Behältergehäuse, eine Anschlussmuffe und einen aufbrechbaren Verschluss. Im Behältergehäuse ist ein Behälterinnenraum ausgebildet, dessen Auslass durch die Anschlussmuffe führt und im unzerstörten Zustand des aufbrechbaren Verschlusses durch denselben dicht verschlossen ist. Der aufbrechbare Verschluss ist von der Mündung der Anschlussmuffe zurückversetzt in einer Innenkontur der Anschlussmuffe angeordnet, so dass der aufbrechbare Verschluss durch die Anschlussmuffe geschützt ist und erst mit dem Aufbrechelement aufbrechbar ist, wenn die Führungspartie des Anschlussstutzens von der Anschlussmuffe umfasst und in derselben geführt ist.

Der aufbrechbare Verschluss kann eine dünnwandige, vorzugsweise flexible Scheibe, eine Membrane oder eine Folie sein, welche Scheibe, Membrane oder Folie eben, gewellt oder bombiert ausgebildet ist. Ferner kann der aufbrechbare Verschluss eine im Wesentlichen gleichbleibende Materialstärke aufweisen.

Sofern es notwendig erscheint, kann der aufbrechbare Verschluss mindestens eine Biegestelle und/oder eine Sollbruchstelle aufweisen. Die Sollbruchstelle, üblicherweise eine Kerbe oder Perforation, definiert in der ausgedehnten Fläche des Verschlusses die genaue Bruchstelle. Dadurch kann beim Aufbrechelement gegebenenfalls auf scharfe Schneiden verzichtet werden Die Biegestellen dienen dazu, dass sich die Bruchstücke an genau definierten Stellen an die Innenkontur der Anschlussmuffe anlegen.

Es kann aus Sicherheitsgründen von Vorteil sein, dass mehr als ein irreversibler Verschluss hintereinander in der Innenkontur der Anschlussmuffe angeordnet sind, so dass zwei Verschlüsse durchbrochen werden müssen, bevor das in der Behältereinheit vorhandene Dosiergut in die Dosiereinheit gelangen kann. Der Zwischenraum zwischen zwei derart angeordneten Verschlüssen kann zudem mit einem Schutzgas oder einem inerten, detektierbaren Gas gefüllt sein, so dass bei einer unabsichtlichen Zerstörung des ersten Verschlusses die die Behältereinheit handhabende Person gewarnt wird.

Durch die Wahl eines flexiblen Materials, beispielsweise einer Kunststoff- oder Metallfolie, wird eine Zersplitterung des Verschlusses vermieden. Ferner schmiegen sich die Überreste des Verschlusses an den durchdringenden Anschlussstutzen beziehungsweise dessen Führungspartie an und dichten so den Ringspalt zwischen der Innenkontur und der Führungspartie zusätzlich ab.

In der Herstellung von erfindungsgemässen kartuschenartigen Behältereinheiten kann es von Vorteil sein, wenn die Behältereinheit zusätzlich zu der durch die Anschlussmuffe führenden Auslassöffnung eine separate Einfüllöffnung und einen zur Einfüllöffnung passenden Verschlussdeckel aufweist. Der Verschlussdeckel kann beispielsweise nach dem Füllen der Behältereinheit durch Verschweissen permanent verschlossen werden.

In einer Ausgestaltung ist die Innenkontur der Anschlussmuffe dem Profil der Führungspartie angepasst. Die für diese Anpassung wesentlichen Dimensionen und Toleranzen werden vorteilhaft so gewählt, dass zwischen der Innenkontur der Anschlussmuffe und der Führungspartie ein der Materialstärke des aufbrechbaren Verschlusses entsprechendes Spiel vorhanden ist.

In einer weiteren Ausgestaltung kann an der Innenkontur der Anschlussmuffe und/oder an der Führungspartie eine der Aufnahme der Reste des aufbrechbaren Verschlusses dienende Ausnehmung ausgebildet sein. Vorzugsweise ist diese Ausnehmung ringförmig ausgebildet, so dass die Reste des aufbrechbaren Verschlusses nach dem Aufbrechen sicher vom Dosiergut getrennt sind und sich während des Betriebes keine Bruchstücke von den Resten lösen und in das Dosiergut geraten können. Ferner muss bei der Dimensionierung der Führungspartie und der Innenkontur durch die Verwendung der Aussparung die Materialstärke des aufbrechbaren Verschlusses nicht berücksichtigt werden, wobei mittels kleinster Durchmesserdifferenzen eine dosiergutdichte Dichtungszone zwischen der Innenkontur und der Führungspartie ausgebildet werden kann.

Es hat sich gezeigt, dass ein z.B. folienartiger aufbrechbarer Verschluss beim Einsetzen der Führungspartie in die Anschlussmuffe durch die oben beschriebenen, z.B. eine Pyramide bildenden Schneiden des Aufbrechelementes sauber in Sektoren aufgetrennt wird, welche gegen die Innenwand der Anschlussmuffe gedrückt werden, wobei die aufgeschnittenen Foliensektoren den erwähnten Spielraum zwischen der Innenkontur der Anschlussmuffe und der Führungspartie ausfüllen.

Vorteilhafterweise ist in der Innenkontur der Anschlussmuffe zwischen der Anschlussmuffenmündung und dem aufbrechbaren Verschluss eine Dichtungspartie angeordnet, welche den Spielraum zwischen der Führungspartie und der Innenkontur der Anschlussmuffe jederzeit, d.h. ab Beginn des Einsetzens der Führungspartie in die Anschlussmuffe, zuverlässig abdichtet. Zusätzlich kann die Dichtungspartie eine Reinigung des Stutzens beim Abziehen und Aufsetzen der Behältereinheit bewirken.

In einer vorteilhaften Ausführungsform der Behältereinheit sind das Behältergehäuse, der aufbrechbare Verschluss und die Anschlussmuffe einstückig miteinander verbunden. Dadurch werden eine kostengünstige Massenproduktion, beispielsweise als Kunststoff- Spritzgussteil ermöglicht und Montagefehler im Bereich des zerstörungsanfälligen Verschlusses vermieden.

Das Behältergehäuse, der aufbrechbare Verschluss und die Anschlussmuffe können jedoch auch als separate Teile gefertigt werden, wobei zum Beispiel sowohl das Behältergehäuse als auch die Anschlussmuffe je einen Anschlussflansch aufweisen. Der aufbrechbare Verschluss in der Form einer dünnen Scheibe oder Folie wird dann zwischen den Anschlussflanschen verklebt, verschweisst, verpresst oder verschraubt.

Bei der Herstellung von gebrauchsfertigen gefüllten Behältereinheiten wird der Behälterinnenraum mit Pulver, Granulat, flüssigem oder pastenförmigem Dosiergut verfüllt und vorzugsweise die Einfüllöffnung anschliessend gasdicht verschweisst.

Eine erfindungsgemässe Dosiereinheit mit einer auswechselbaren kartuschenartigen Behältereinheit gemäss vorstehender Beschreibung kann vorteilhaft in einem Laborgerät zur Verarbeitung von pulverförmigem, pastenförmigem oder flüssigem Dosiergut verwendet werden, wobei die Dosiereinheit selbst in das Laborgerät einsetzbar, von diesem entfernbar, sowie durch eine andere Dosiereinheit ersetzbar sein kann.

Die Dosiereinheit mit der kartuschenartigen Behältereinheit wird im Folgenden anhand von Beispielen und mit Bezugnahme auf die Zeichnungen näher erläutert. Wo ein Element in gleicher Ausgestaltung in mehr als einer Figur vorkommt wird es mit demselben Bezugssymbol bezeichnet. Es zeigen:
- Figur 1: eine schematische Gesamtansicht einer erfindungsgemässen Dosiereinheit und einer davon getrennten Behältereineinheit;
- Figur 2: eine perspektivische Ansicht einer erfindungsgemässen Ausführungsform des Anschlussstutzens, der Anschlussmuffe und des Aufbrechelementes;
- Figur 3: eine Schnittzeichnung des Anschlussstutzens und der Anschlussmuffe von Figur 2;
- Figur 4A: ein erstes Beispiel eines nicht kreiszylindrischen Querschnittsprofils der Innenkontur der Anschlussmuffe und der Führungspartie des Anschlussstutzens;
- Figur 4B: ein zweites Beispiel eines nicht kreiszylindrischen Querschnittsprofils der Innenkontur der Anschlussmuffe und der Führungspartie des Anschlussstutzens;
- Figur 5: eine Detailansicht im Schnitt einer Schnappverbindung des Anschlussstutzens und der Anschlussmuffe;
- Figur 6: eine Detailansicht im Schnitt einer ersten Schraubverbindung des Anschlussstutzens und der Anschlussmuffe;
- Figur 7: eine Detailansicht im Schnitt einer zweiten Schraubverbindung des Anschlussstutzens und der Anschlussmuffe; und
- Figur 8: ein Dosiergerät in dreidimensionaler Darstellung mit eingesetzter Dosiereinheit in einer typischen Gebrauchssituation.

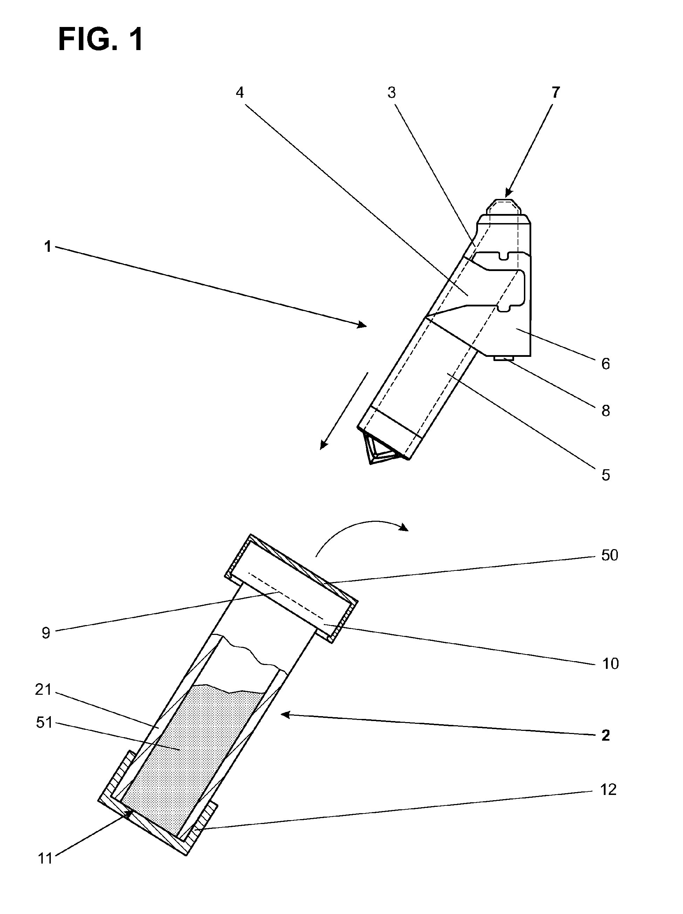

Figur 1 zeigt beispielhaft eine Dosiereinheit 1, welche mit einer Behältereinheit 2 verbindbar ist. Die Dosiereinheit 1 und die Behältereinheit 2 sind in einer für den Verbindungsvorgang bevorzugten Lage dargestellt. Nach dem Verbinden der Behältereinheit 2 mit der Dosiereinheit 1 kann dieser Verbund in seine Betriebslage gedreht werden.

Das Gehäuse 3 der Dosiereinheit 1 enthält einen mit unterbrochener Linie angedeuteten Aufnahmeraum 4 für Dosiergut 51, welcher Aufnahmeraum 4 eine durchgängige Verbindung vom Anschlussstutzen 5 zum Dosierkopf 6 und zu dessen Auslassöffnung 7 bildet. Die Auslassöffnung 7 sowie eine Antriebskupplung 8 für ein im Dosierkopf 6 befindliches, nicht dargestelltes Rühr- und Fördermittel sind umrissweise erkennbar. Aufgrund des in der Dosiereinheit 1 ausgebildeten Aufnahmeraums 4, kann das Dosiergut 51 nach wie vor auf konventionelle Weise mittels Trichter und Spatel in die Dosiereinheit 1 verfüllt werden.

Mit dem Anschlussstutzen 5 ist eine auf den Anschlussstutzen 5 passende Anschlussmuffe 10 der Behältereinheit 2 verbindbar. In der Anschlussmuffe 10 ist mindestens ein, durch eine unterbrochene Linie angedeuteter, irreversibel aufbrechbarer Verschluss 9 angeordnet. Es kann aus Sicherheitsgründen von Vorteil sein, dass mehr als ein irreversibler Verschluss 9 hintereinander in der Anschlussmuffe 10 angeordnet sind, so dass zwei Verschlüsse 9 durchbrochen werden müssen, bevor das in der Behältereinheit 2 vorhandene Dosiergut 51 in den Aufnahmeraum 4 der Dosiereinheit 1 gelangen kann. Der Zwischenraum zwischen zwei derart angeordneten Verschlüssen 9 kann zudem mit einem Schutzgas oder mit einem inerten, detektierbaren Gas gefüllt sein, so dass bei einer unabsichtlichen Zerstörung des ersten Verschlusses 9 die die Behältereinheit 2 handhabende Person unverzüglich gewarnt wird, ohne dass bereits Dosiergut 51 in die Umgebung austritt.

Ferner kann zum Schutz des aufbrechbaren Verschlusses 9 ein Schutzdeckel 50 vorhanden sein, mit welchem die Öffnung der Anschlussmuffe 10 während des Transports und der Lagerung der Behältereinheit 2 abgedeckt wird. Dieser Schutzdeckel 50 wird unmittelbar vor dem Verbinden der Behältereinheit 2 mit der Dosiereinheit 1 von der Anschlussmuffe 10 entfernt.

Im Herstell- und Füllprozess der Behältereinheit 2, kann dieselbe bei einer geeigneten Ausgestaltung der Anschlussmuffe 10 und des aufbrechbaren Verschlusses 9 vor dem Anbringen des aufbrechbaren Verschlusses 9, durch die Öffnung der Anschlussmuffe 10 befüllt werden. Die Behältereinheit 2 kann aber auch, wie in Figur 1 gezeigt, ein Behältergehäuse 21 mit einer separaten Einfüllöffnung 11 aufweisen, welche nach dem Füllen der Behältereinheit 2 mit einem Verschlussdeckel 12, beispielsweise durch Verschweissen permanent und gasdicht verschlossen wird.

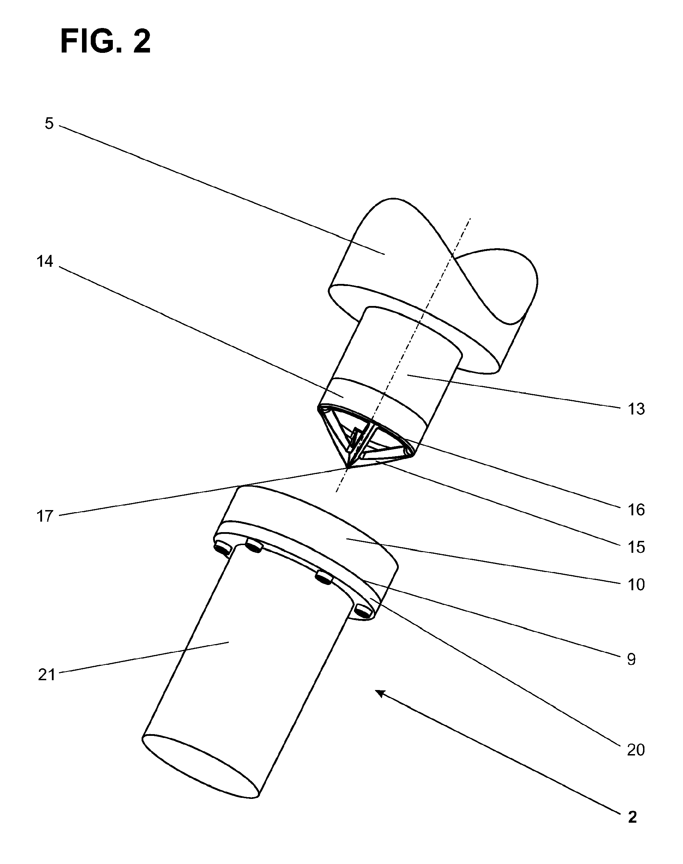

Figur 2 zeigt perspektivische Detailansichten eines Anschlussstutzens 5 mit einem Aufbrechelement 14 und eine Behältereinheit 2 mit einer Anschlussmuffe 10. Der Anschlussstutzen 5 weist eine mit rundem Querschnittsprofil ausgestaltete Führungspartie 13 auf. Im abgebildeten Beispiel hat das an der Mündung des Anschlussstutzens 5 angeordnete Aufbrechelement 14 vier Schneiden 15, welche vom Rand 16 der Anschlussstutzenmündung gegen eine auf der Mittellängsachse des Anschlussstutzens 5 liegende Spitze 17 streben und somit die Kanten einer Pyramide bilden.

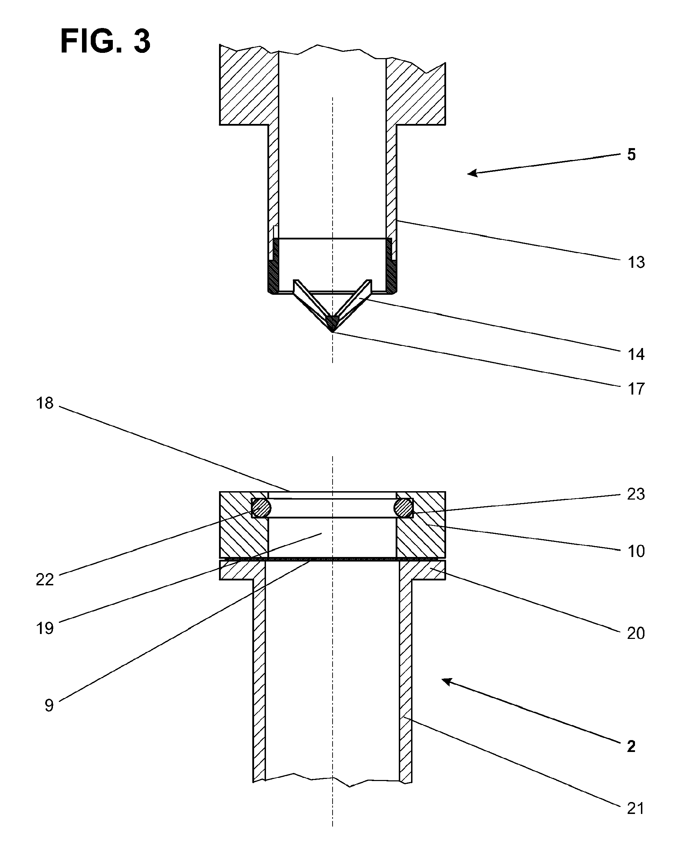

Wie Figur 3 zeigt, ist der aufbrechbare Verschluss 9, vorzugsweise in Form einer dünnen Scheibe, Membran oder Folie, von der Mündung 18 der Anschlussmuffe 10 soweit zurückversetzt in einer Innenkontur 19 der Anschlussmuffe 10 angeordnet, dass der aufbrechbare Verschluss 9 mit der Spitze 17 des Aufbrechelements 14 erst in Berührung kommt und aufgebrochen wird, nachdem die Führungspartie 13 des Anschlussstutzens 5 von der Innenkontur 19 der Anschlussmuffe 10 umfasst und in derselben geführt ist. Der aufbrechbare Verschluss 9, vorzugsweise eine Folie, eine Scheibe oder eine Membrane, wird ausserdem durch die zurückgesetzte Stellung in der Anschlussmuffe 10 vor unbeabsichtigter Verletzung beim Transport oder bei der Lagerung und Handhabung geschützt. Der Schutz kann selbstverständlich nochmals verbessert werden, wenn die Anschlussmuffe 10 wie in der Figur 1 dargestellt, durch einen entfernbaren Schutzdeckel verschlossen wird. Dieser Deckel schützt ferner die Innenkontur 19 der Anschlussmuffe 10 vor Verschmutzung.

Wie in Figur 2 und Figur 3 angedeutet, kann der aufbrechbare Verschluss 9 sandwichartig zwischen einem flanschartig erweiterten Hals 20 des Behältergehäuses 21 und der ringförmigen Anschlussmuffe 10 eingebettet sein, wobei das Verschlusselement 9 zwischen der Anschlussmuffe 10 und dem flanschartig erweiterten Hals 20 verklebt, verschweisst oder verschraubt wird.
Wie ferner in Figur 3 im Schnitt gezeigt ist, kann in der Innenkontur 19 der Anschlussmuffe 10 zwischen der Anschlussmuffenmündung 18 und dem aufbrechbaren Verschluss 9 eine Dichtungspartie angeordnet sein, beispielsweise in Form eines Dichtungsrings 22 der in einer Nut 23 sitzt. Durch diese Anordnung der Dichtung 22 wird der Spielraum beziehungsweise der Ringspalt zwischen der Führungspartie 13 und der Innenkontur 19 der Anschlussmuffe 10 auch schon während des Aufbrechens des Verschlusselementes 9 gegen aussen abdichtet, so dass kein Dosiergut austreten oder Umgebungsluft eintreten kann. Beim Abziehen der leeren Behältereinheit 2 von der Dosiereinheit 1 und dem Aufsetzen einer neuen Behältereinheit 2 kann die Dichtungspartie zudem von Nutzen sein, indem verbleibende Dosiergutpartikel von der Führungspartie 13 des Anschlussstutzens abgestreift werden.

In dem in Figur 2 und Figur 3 gezeigten Ausführungsbeispiel, hat die Führungspartie 13 einen orthogonal zu ihrer Mittellängsachse konstanten kreisrunden Querschnitt, sodass der Anschlussstutzen 5 in beliebig gedrehter Stellung in die Anschlussmuffe 10 eingesetzt und nach dem Einsetzen ebenfalls noch gedreht werden kann. Bevorzugt ist jedoch eine Querschnittsform der Führungspartie 13, welche an mindestens einer Stelle des Umfanges von der kreisrunden Form abweicht.

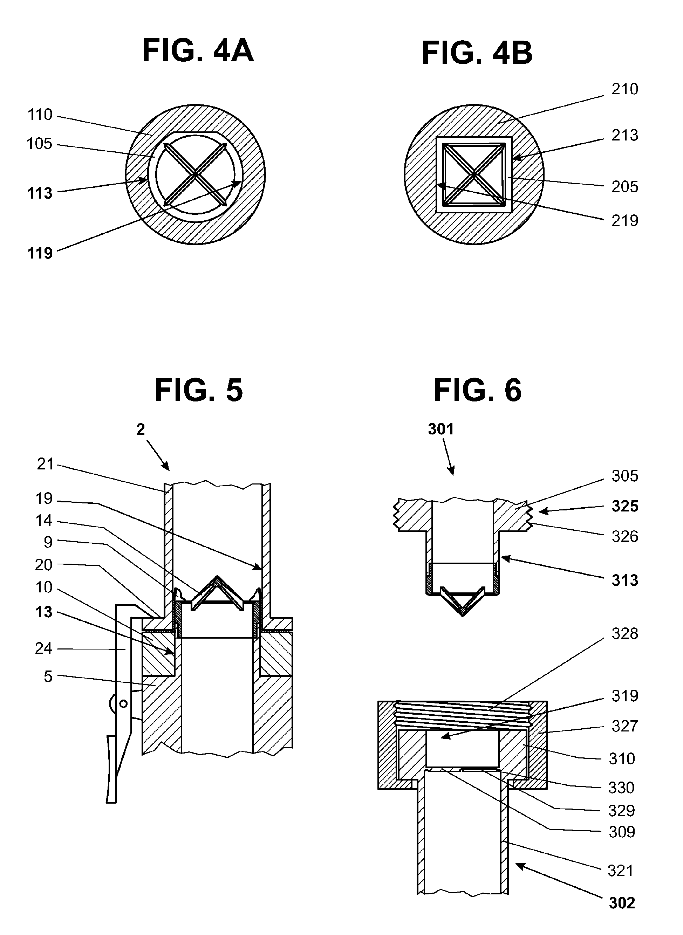

Die Figur 4A zeigt einen Querschnitt durch eine Anschlussmuffe 110 mit eingesetztem Anschlussstutzen 105, wobei das Aussenprofil einer Führungspartie 113 des Anschlussstutzens 105 und die dazupassende Innenkontur 119 der Anschlussmuffe 110 die Form eines segmentweise abgeflachten Kreises hat.

Die Figur 4B zeigt einen Querschnitt durch eine Anschlussmuffe 210 mit eingesetztem Anschlussstutzen 205, wobei das Aussenprofil einer Führungspartie 213 des Anschlussstutzens 205 und die dazupassende Innenkontur 219 der Anschlussmuffe 210 eine quadratische Form haben.

Ausschlaggebend für die Wahl eines nicht runden Profils der Führungspartie 13 und der dazu passenden Anschlussmuffe 10 ist, dass dadurch eine Drehbewegung beim Verbinden der beiden Teile zwangsläufig ausgeschlossen wird. Damit wird erreicht, dass wie in Figur 5 dargestellt, das Aufbrechelement 14 den aufbrechbaren Verschluss 9, beispielsweise eine aus flexiblem Material bestehende Verschlussfolie, Verschlussscheibe oder Verschlussmembran, sauber in Sektoren auftrennt, welche sich beim weiteren Einstossen der Führungspartie 13 in die Anschlussmuffe 10 an die Innenkontur 19 der Anschlussmuffe 10 anlegen. Bei einer runden Querschnittsform der Führungspartie 13, welche eine Drehbewegung beim Verbinden zulässt, besteht die Gefahr, dass der aufbrechbare Verschluss 9 unkontrolliert in lose Fragmente zerrissen wird, welche möglicherweise sogar mit dem Dosiergut vermischt durch die Auslassöffnung des Dosierkopfes ausdosiert werden könnten.

Das unbeabsichtigte Trennen der Behältereinheit von der Dosiereinheit kann beispielsweise durch eine Schnappverbindung verhindert werden, wie sie in Figur 5 dargestellt ist. Eine am Anschlussstutzen 5 befestigte Federklinke 24 schnappt beim Einsetzen der Behältereinheit 2 hinter dem Flansch 20 des Behältergehäuses 21 ein. Durch Fingerdruck kann die Federklinke 24 wieder ausgerastet werden.

In Figur 6 ist als weitere Möglichkeit eine erste Ausführung einer Schraubverbindung zum Verbinden einer Behältereinheit 302 mit einer Dosiereinheit 301 dargestellt. Ein kreiszylindrischer Basisteil 325 des Anschlussstutzens 305 ist mit einem Aussengewinde 326 versehen, während eine der Anschlussmuffe 310 zugeordnete und gegenüber dieser drehbare Überwurfmutter 327 mit einem entsprechenden Innengewinde 328 versehen ist. Falls die Führungspartie 313 des Anschlussstutzens 305 und die Innenkontur 319 der Anschlussmuffe 310, wie oben beschrieben, eine nicht kreiszylindrische Form aufweisen, so werden die beiden Teile beim Einschrauben der Überwurfmutter 327 verdrehungsfrei zusammengeführt. Wie in Figur 6 ebenfalls dargestellt, ist der aufbrechbare Verschluss 309 und die Anschlussmuffe 310 einstückig mit dem Behältergehäuse 321 verbunden. Ferner weist der aufbrechbare Verschluss 309 mindestens eine Sollbruchstelle 329 und mindestens eine Biegestelle 330 auf. Die Sollbruchstelle 329 und die Biegestellen 330 sind im Wesentlichen nutförmige Kerben, wobei vorzugsweise die Kerben der Sollbruchstellen 329 tiefer sind als die Kerben der Biegestellen 330. Sowohl die Biegestellen 330 als auch die Sollbruchstellen 329 können beispielsweise mittels einer entsprechend konzipierten Spritzgussform erzeugt werden. Sie können aber auch nachträglich mit gängigen Verfahren wie Fräsen, Prägen, Schleifen und dergleichen mehr hergestellt werden. Auch Perforationen sind denkbar, wobei die Querschnittfläche der einzelnen Durchbrüche der perforierten Stellen kleiner als der Querschnitt der minimalen Korngrösse sein muss.

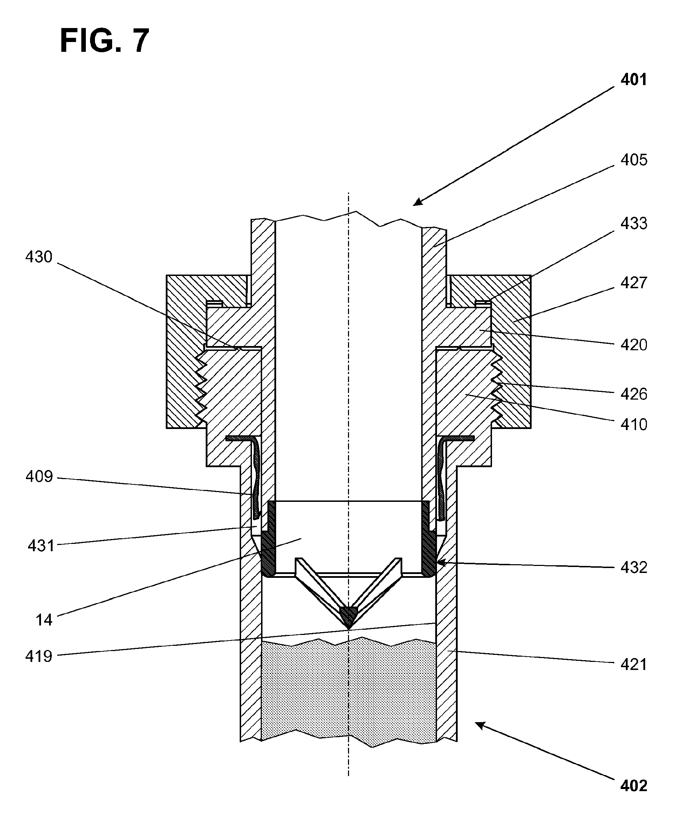

Figur 7 zeigt eine zweite Ausführung einer Schraubverbindung zum Verbinden einer Behältereinheit 402 mit einer Dosiereinheit 401, wobei die Behältereinheit 402 bereits mit der Dosiereinheit 401 verbunden ist. Ein aufbrechbarer Verschluss 409, beispielsweise eine Metallfolie, wird bei der Herstellung der Behältereinheit 402 beispielsweise mit Kunststoff umspritzt, so dass das Behältergehäuse 421 und die Anschlussmuffe 410 einstückig miteinander verbunden ausgebildet sind. An Stelle eines elastischen Dichtungsrings ist stirnseitig an der Anschlussmuffe 410 eine ringförmige Dichtlippe 430 angeformt. Ferner weist die Innenkontur 419 unmittelbar an den aufbrechbaren Verschluss 419 anschliessend eine Ausnehmung 431 auf. Diese Ausnehmung 431 nimmt wie dargestellt, die Reste des aufgebrochenen Verschlusses 409 auf. Der Durchmesser des Aufbrechelements 14 ist der Innenkontur 419 angepasst, so dass zwischen der Innenkontur 419 und dem Aufbrechelement 14 ein passgenauer Schiebesitz oder gegebenenfalls ein leichter Presssitz vorhanden ist, welcher eine Dichtungszone 432 bildet.

An der zylindrischen Aussenwand der Anschlussmuffe 410 ist ferner ein Aussengewinde 426 angeformt. Das Aussengewinde 426 passt zu einer am Anschlussstutzen 405 der Dosiereinheit 401 drehbar angeordneten Überwurfmutter 427. Die Überwurfmutter 427 wird vom am Anschlussstutzen 405 ausgebildeten Bund 420 gehalten. An der, dem Aufbrechelement 14 abgewandten Stirnseite des Bundes 420, ist die erste Hälfte eines Rastelements 433 ausgebildet, beispielsweise mehrerer von der Mittellängsachse strahlenförmig ausgehende Nuten mit sägezahnförmigem Querschnittprofil. Sinngemäss weist die mit dieser Stirnseite in Anlage stehende, ringförmige Innenfläche der Überwurfmutter 427 die zweite Hälfte des Rastelements 433, beispielsweise entsprechend zu den Nuten passende Rippen auf. Durch das sägezahnförmige Querschnittprofil kann die Überwurfmutter 427 nur in einer Richtung relativ zum Anschlussstutzen 405 gedreht werden, wodurch eine mit diesem Anschlussstutzen 405 verbundene Behältereinheit 402 nicht mehr entfernt werden kann.

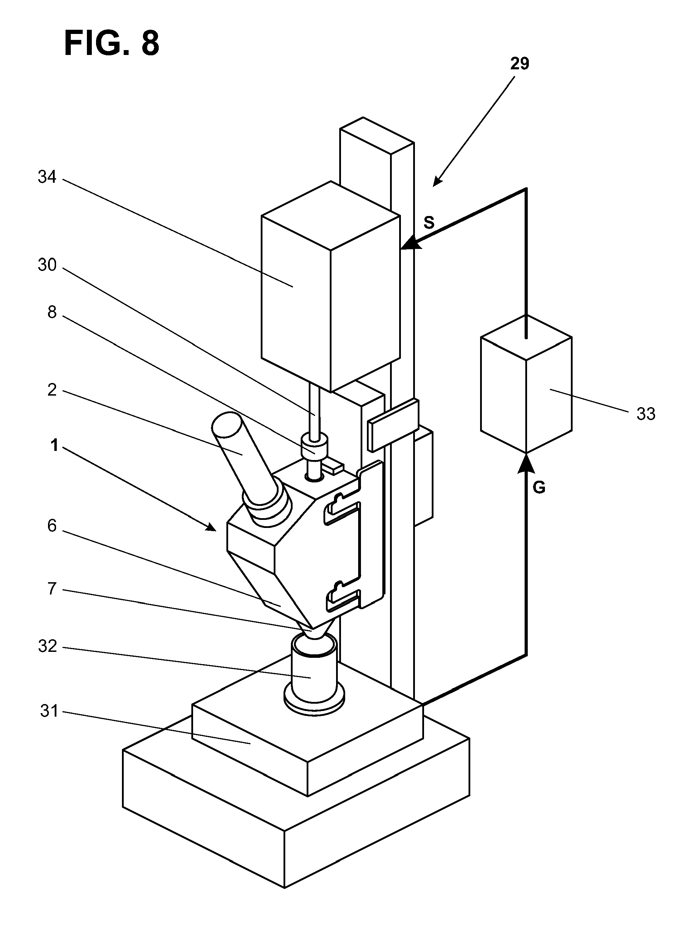

Figur 8 zeigt eine erfindungsgemässe Dosiereinheit 1 mit einer auswechselbaren kartuschenartigen Behältereinheit 2 gemäss der voranstehenden Beschreibung. Die Dosiereinheit 1 wird beispielsweise durch einfaches Einschieben oder Einsetzen mit einem Dosiergerät 29 verbunden, wobei die Antriebskupplung 8 für das im Dosierkopf 6 befindliche Rühr- und Fördermittel mit der Antriebswelle 30 eines im Dosiergerät befindlichen Dosierantriebs 34 zum Eingriff kommt und die Auslassöffnung 7 des Dosierkopfes 6 über einem auf einer Waage 31 stehenden Auffangbehälter 32 positioniert wird. Eine nach Gewicht vorgegebene Dosiergutmenge wird aus der Dosiereinheit 1 in den Auffangbehälter 32 dosiert, indem beispielsweise ein Computer 33, gegebenenfalls auch eine in der Waage 31 oder im Dosiergerät 29 vorhandene Steuerelektronik, laufend die Gewichtssignale G der Waage 31 empfängt und dem Dosierantrieb 34 den Gewichtssignalen G entsprechende Steuersignale S sendet, wobei der Dosierantrieb 34 beim Erreichen des vorgegebenen Dosiergutgewichts abgestellt wird.

Obwohl die Erfindung durch die Darstellung spezifischer Ausführungsbeispiele beschrieben worden ist, ist es offensichtlich, dass zahlreiche weitere Ausführungsvarianten in Kenntnis der vorliegenden Erfindung geschaffen werden können, beispielsweise indem die Merkmale der einzelnen Ausführungsbeispiele miteinander kombiniert und/oder einzelne Funktionseinheiten der Ausführungsbeispiele ausgetauscht werden. Insbesondere sind weitere Ausführungen denkbar, die den Erfindungsgegenstand beinhalten. Beispielsweise kann das Gehäuse mit dem Dosierkopf und mindestens einem Anschlussstutzen mit einem Aufbrechelement fest in ein Laborgerät eingebaut sein, mit welchen Anschlussstutzen die erfindungsgemässen Behältereinheiten verbindbar sind.

### Bezugszeichenliste

- 401, 301, 1: Dosiereinheit
- 402, 302, 2: Behältereinheit
- 3: Gehäuse
- 4: Aufnahmeraum
- 405, 305, 205, 105, 5: Anschlussstutzen
- 6: Dosierkopf
- 7: Auslassöffnung
- 8: Antriebskupplung
- 409, 309, 9: aufbrechbarer Verschluss
- 410, 310, 210, 110, 10: Anschlussmuffe
- 11: Einfüllöffnung
- 12: Verschlussdeckel
- 213, 113, 13: Führungspartie
- 14: Aufbrechelement
- 15: Schneiden
- 16: Rand
- 17: Spitze
- 18: Mündung
- 419, 219, 119, 19: Innenkontur
- 20: Flansch
- 421, 21: Behältergehäuse
- 22: Dichtungsring
- 23: Ringnut
- 24: Federklinke
- 29: Dosiergerät
- 30: Antriebswelle
- 31: Waage
- 32: Auffangbehälter
- 33: Computer
- 34: Dosierantrieb
- 50: Schutzdeckel
- 51: Dosiergut
- 325: Basisteil
- 426, 326: Aussengewinde
- 427, 327: Überwurfmutter
- 328: Innengewinde
- 329: Sollbruchstelle
- 330: Biegestelle
- 420: Bund
- 430: Dichtlippe
- 431: Ausnehmung
- 432: Dichtungszone
- 433: Rastelement
- G: Gewichtssignale
- S: Steuersignale

## Patentansprüche

1. Dosiereinheit (1, 301, 401) mit einem Gehäuse (3) und mit mindestens einem im Gehäuse (3) ausgebildeten Aufnahmeraum (4) für Dosiergut (51), wobei durch den Aufnahmeraum (4) ein mit dem Gehäuse (3) fest verbundener Dosierkopf (6) mit einem am Gehäuse (3) ausgebildeten Anschlussstutzen (5, 105, 205, 305, 405) durchgängig verbunden ist, **dadurch gekennzeichnet, dass** eine Behältereinheit (2, 302, 402) mittels mindestens einer an der Behältereinheit (2, 302, 402) angeordneten Anschlussmuffe (10, 110, 210, 310, 410) mit dem Anschlussstutzen (5, 105, 205, 305, 405) verbindbar ist, in welcher Anschlussmuffe (10, 110, 210, 310, 410) mindestens ein irreversibel aufbrechbarer Verschluss (9, 309, 409) angeordnet ist, wobei der Anschlussstutzen (5, 105, 205, 305, 405) ein dem Aufbrechen des irreversibel aufbrechbaren Verschlusses (9, 309, 409) dienendes Aufbrechelement (14) aufweist.

2. Dosiereinheit (1, 301, 401) nach Anspruch 1, **dadurch gekennzeichnet, dass** das Aufbrechelement (14) an der Mündung des Anschlussstutzens (5, 105, 205, 305, 405) angeordnet ist und dass der Anschlussstutzen (5, 105, 205, 305, 405) an seiner Aussenseite eine zum Einführen des Anschlussstutzens (5, 105, 205, 305, 405) in die Anschlussmuffe (10, 110, 210, 310, 410) ausgebildete Führungspartie (13, 113, 213) aufweist.

3. Dosiereinheit (1, 301. 401) nach Anspruch 2, **dadurch gekennzeichnet, dass** die Führungspartie (13, 113, 213) orthogonal zu ihrer Mittellängsachse
• einen konstanten kreisrunden Querschnitt aufweist, oder
• einen konstanten, an mindestens einer Stelle seines Umfanges von der kreisrunden Form abweichenden Querschnitt aufweist, oder
• einen mehreckigen Querschnitt aufweist.

4. Dosiereinheit (1, 301, 401) nach einem der Ansprüche 1 bis 3, **dadurch gekennzeichnet, dass** die Dosiereinheit (1, 301, 401) einen dem Sichern der Verbindung zwischen dem Anschlussstutzen (5, 105, 205, 305, 401) und der Anschlussmuffe (10, 110, 210, 310, 410) dienenden Schnappverschluss (24) oder Schraubverschluss (325, 326, 327, 328, 426, 427) aufweist.

5. Dosiereinheit (1, 301, 401) nach einem der Ansprüche 1 bis 4, **dadurch gekennzeichnet, dass** das Aufbrechelement (14) mindestens drei gegen die Mittellängsachse strebende, strahlenförmig angeordnete Schneiden (15) aufweist.

6. Behältereinheit (2, 302, 402) passend zu einer Dosiereinheit (1, 301, 401) nach einem der Ansprüche 1 bis 5, **dadurch gekennzeichnet, dass** die Behältereinheit (2, 302, 401) ein Behältergehäuse (21, 421), eine Anschlussmuffe (10, 110, 210, 310, 410) und einen aufbrechbaren Verschluss (9, 309, 409) aufweist, wobei im Behältergehäuse (21, 421) ein Behälterinnenraum ausgebildet ist und der aufbrechbare Verschluss (9, 309, 409) in einer Innenkontur (19, 119, 219, 419) der Anschlussmuffe (10, 110, 210, 310, 410) angeordnet ist, welcher aufbrechbare Verschluss (9, 309, 409) den Behälterinnenraum in unzerstörtem Zustand von der Innenkontur (19, 119, 219, 419) der Anschlussmuffe (10, 110, 210, 310, 410) trennt, so dass der aufbrechbare Verschluss (9, 309, 409) durch die Anschlussmuffe (10, 110, 210, 310, 410) geschützt ist und erst dann mit dem Aufbrechelement (14) aufbrechbar ist, wenn die Führungspartie (13, 113, 213) in der Anschlussmuffe (10, 110, 210, 310, 410) geführt ist.

7. Behältereinheit (2, 302, 402) nach Anspruch 6, **dadurch gekennzeichnet, dass** der aufbrechbare Verschluss (9, 309, 409) eine dünnwandige, vorzugsweise flexible Scheibe, eine Membrane oder eine Folie ist, welche Scheibe, Membrane oder Folie eben, gewellt oder bombiert ausgebildet ist.

8. Behältereinheit (2, 302, 402) nach Anspruch 7, **dadurch gekennzeichnet, dass** der aufbrechbare Verschluss (9, 309, 409) mindestens eine Biegestelle (330) und/oder eine Sollbruchstelle (329) aufweist.

9. Behältereinheit (2, 302, 402) nach einem der Ansprüche 6 bis 8, **dadurch gekennzeichnet, dass** die Behältereinheit (2, 302, 402) eine Einfüllöffnung (11) und einen zur Einfüllöffnung (11) passenden Verschlussdeckel (12) aufweist.

10. Behältereinheit (2, 302, 402) nach einem der Ansprüche 6 bis 9, **dadurch gekennzeichnet, dass** die Innenkontur (19, 119, 219, 419) der Anschlussmuffe (10, 110, 210, 310, 410) der Führungspartie (13, 113, 213) angepasst ist.

11. Behältereinheit (2, 302, 402) nach Anspruch 10, **dadurch gekennzeichnet, dass** zwischen der Innenkontur (19, 119, 219, 419) der Anschlussmuffe (10, 110, 210, 310, 410) und der Führungspartie (13, 113, 213) ein der Materialstärke des aufbrechbaren Verschlusses (9, 309, 409) entsprechendes Spiel vorhanden ist.

12. Behältereinheit (2, 302, 402) nach Anspruch 10, **dadurch gekennzeichnet, dass** an der Innenkontur (19, 119, 219, 419) der Anschlussmuffe (10, 110, 210, 310, 410) und/oder an der Führungspartie (13, 113, 213) eine der Aufnahme der Reste des aufbrechbaren Verschlusses (9, 309, 409) dienende Ausnehmung (431) ausgebildet ist.

13. Behältereinheit (2, 302, 402) nach einem der Ansprüche 6 bis 12, **dadurch gekennzeichnet, dass** eine in der Innenkontur (19, 119, 219, 419) der Anschlussmuffe (10, 110, 210, 310, 410) angeordnete Dichtungspartie (22, 23) zwischen der Anschlussmuffenmündung (18) und dem aufbrechbaren Verschluss (9, 309, 409) angeordnet ist.

14. Behältereinheit (2, 302, 402) nach einem der Ansprüche 6 bis 13, **dadurch gekennzeichnet, dass** das Behältergehäuse (21, 421), der aufbrechbare Verschluss (9, 309, 409) und die Anschlussmuffe (10, 110, 210, 310, 410) einstückig miteinander verbunden sind.

15. Behältereinheit (2, 302, 402) nach einem der Ansprüche 6 bis 13, **dadurch gekennzeichnet, dass** das Behältergehäuse (21) einen Anschlussflansch (20) aufweist, dass der aufbrechbare Verschluss (9, 309, 409) zwischen dem Anschlussflansch (20) und der Anschlussmuffe (10, 110, 210, 310, 410) angeordnet ist, und dass der Anschlussflansch (20) und die Anschlussmuffe (10, 110, 210, 310, 410) mit dem aufbrechbaren Verschluss (9, 309, 409) verklebt, verschweisst, verpresst oder verschraubt sind.

16. Behältereinheit (2, 302, 402) nach einem der Ansprüche 6 bis 15, **dadurch gekennzeichnet, dass** der Behälterinnenraum mit Pulver, Granulat, flüssigem oder pastenförmigem Dosiergut (51) verfüllt und die Einfüllöffnung (11) mit dem Deckel (12) gasdicht verschweisst ist.

17. Laborgerät (29) zur Verarbeitung von pulverförmigem, pastenförmigem oder flüssigem Dosiergut (51), **dadurch gekennzeichnet, dass** das Laborgerät (29) mindestens eine Dosiereinheit (1, 301, 401) nach einem der Ansprüche 1 bis 5 umfasst, mit welcher Dosiereinheit (1, 301, 401) eine Behältereinheit (2, 302, 402) nach einem der Ansprüche 6 bis 16, verbindbar ist.

18. Laborgerät (29) nach Anspruch 17, **dadurch gekennzeichnet, dass** die Dosiereinheit (1, 301, 401) in das Laborgerät (29) einsetzbar, von diesem entfernbar sowie gegen eine andere Dosiereinheit (1, 301, 401) austauschbar ist.
